# EUROPÄISCHE PATENTSCHRIFT

(11) **EP 2 944 554 B1**
(45) Veröffentlichungstag und Bekanntmachung des Hinweises auf die Patenterteilung: **10.07.2019**
(21) Anmeldenummer: 15167167.4
(22) Anmeldetag: 11.05.2015
(51) Int. Cl.: B62K 19/06, B62K 3/04, B62K 19/18, B62K 19/28

(54) **FAHRRAD MIT EINTEILIGEM FAHRRADRAHMEN**
BICYCLE WITH SINGLE-PIECE BICYCLE FRAME
VÉLO ÉQUIPÉ D'UN CADRE EN UN SEUL TENANT

(30) Priorität: 15.05.2014 DE 102014106895
(43) Veröffentlichungstag der Anmeldung: 18.11.2015
(73) Patentinhaber: LACNY GmbH, 85080 Gaimersheim (DE)
(72) Erfinder: Lacny, Tadeusz Józef, 80936 München (DE)
(74) Vertreter: Bergmeier, Werner

(56) Entgegenhaltungen:
- EP-A2- 0 095 024
- WO-A1-2004/005122
- DE-A1- 4 029 884
- DE-A1-102007 038 109
- DE-C- 852 047
- FR-A- 872 372
- FR-A- 909 163
- FR-A- 1 092 987
- US-A- 506 194
- US-A- 2 187 020
- US-A- 2 250 805
- US-A- 2 333 642
- US-A- 3 226 132
- US-A1- 2012 126 508

## Beschreibung

Die vorliegende Erfindung betrifft einen Fahrradrahmen, ausgebildet aus einem Rohrprofil. Das Rohrprofil besteht aus einem als obere Hinterradstrebe ausgebildeten ersten Rohrabschnitt, einem als Oberrohr ausgebildeten zweiten Rohrabschnitt, einem als Unterrohr ausgebildeten dritten Rohrabschnitt und einem als untere Hinterradstrebe ausgebildeten vierten Rohrabschnitt. Des Weiteren Betrifft die Erfindung ein Fahrrad mit einem derartigen Rahmen.

Aus der DE 200 06 468 U1 ist ein Fahrrad mit einem Rahmen bekannt, der aus einem Rohrstück gebogen ist. Der Rahmen umfasst eine untere Längsstrebe, eine untere Hinterradstrebe, eine obere Hinterradstrebe und eine obere Längsstrebe. Die untere Längsstrebe und die obere Längsstrebe laufen im Bereich des Lenkerkopfes zusammen und sind mit diesem verschweißt. Im Bereich der beiden zusammenlaufenden Hinterradstreben ist eine Aufnahme zum Halten eines Hinterrades vorgesehen. Ein Sattelrohr erstreckt sich von einem Tretlager bis in einen Kreuzungsbereich zwischen dem Sattelrohr und der oberen Längsstrebe. Nachteilig hierbei ist, dass bei der Herstellung des Rahmens mehrere aufwendige Arbeitsschritte von Nöten sind. Demnach muss der Rahmen zunächst in einem ersten Arbeitsschritt gebogen werden. Danach müssen die beiden Enden in einem zweiten Arbeitsschritt mit dem Lenkerrohr verschweißt werden. Ferner ist noch eine separate Montage des Sattelrohrs in einem dritten Arbeitsschritt notwendig. Hierdurch erhöht sich insbesondere der Material- und Arbeitsaufwand bei der Produktion des Rahmens. Des Weiteren führen die zusätzlichen Komponenten zu einem erhöhten Gewicht des Fahrrads. Auch verhindert das Sattelrohr eine Federwirkung in Vertikalrichtung des Fahrrads. Ein weiterer wesentlicher Nachteil des vorstehend genannten Standes der Technik besteht darin, dass Wartungs- und/oder Umrüstarbeiten nur beschränkt oder mit erhöhtem Aufwand durchzuführen sind, da zumindest einige Komponenten der Pedal-, Lenker- und/oder Satteleinheit fest mit dem Rahmen verschweißt sind. Dokument US2187020 offenbart einen Fahrradrahmen, auf den der Oberbegriff von Anspruch 1 basiert. Ein ganz ähnlicher Fahrradrahmen ist in der DE852047 offenbart.

Aufgabe der vorliegenden Erfindung ist es somit, einen, insbesondere leichten, Fahrradrahmen zu schaffen, der einfach herzustellen, zu warten und/oder umzurüsten ist.

Die Aufgabe wird gelöst durch einen Fahrradrahmen sowie ein Fahrrad mit den Merkmalen der unabhängigen Patentansprüche 1 und 11.

Der erfindungsgemäße Fahrradrahmen ist aus einem, insbesondere einzigen, Rohrprofil ausgebildet. Er umfasst einen als obere Hinterradstrebe ausgebildeten ersten Rohrabschnitt, einen als Oberrohr ausgebildeten zweiten Rohrabschnitt, einen als Unterrohr ausgebildeten dritten Rohrabschnitt und einen als untere Hinterradstrebe ausgebildeten vierten Rohrabschnitt. Hierbei erstreckt sich die Hinterradstrebe von einem Bereich des dafür vorgesehenen Hinterrades ausgehend bis in den Bereich des dafür vorgesehenen Sattels. Von dort aus erstreckt sich das Oberrohr des Fahrradrahmens weiter bis in einen Lenkerbereich. Der als Unterrohr ausgebildete dritte Rohrabschnitt erstreckt sich vom Lenkerbereich ausgehend bis in den Bereich der Pedale. Von diesem Bereich ausgehend erstreckt sich die Hinterradstrebe bis in den Bereich des dafür vorgesehenen Hinterrades.

Um die Herstellungskosten des Fahrradrahmens möglichst gering zu halten, ist dessen Rohrprofil einteilig ausgebildet. Hierdurch muss die obere Hinterradstrebe, das Oberrohr, das Unterrohr und die untere Hinterradstrebe nicht in einem aufwendigen Schweißverfahren miteinander stoffschlüssig verbunden werden. Stattdessen können diese, insbesondere im Rahmen eines Umformverfahrens, aus einem einteiligen Grundrohr hergestellt werden. Um zwischen den Rohrabschnitten gänzlich auf verbindende Schweißnähte verzichten zu können, weist der erste Rohrabschnitt ein dem zweiten Rohrabschnitt abgewandtes erstes freies Ende und der vierte Rohrabschnitt ein dem dritten Rohrabschnitt abgewandtes zweites freies Ende auf. Die beiden Enden sind in Querrichtung des Fahrradrahmens derart voneinander beabstandet, dass zwischen diesen ein dafür vorgesehenes Hinterrad drehbar aufnehmbar ist. Der Fahrradrahmen ist somit in der Seitenansicht als geschlossener Fahrradrahmen und/oder in der Rückansicht als offener Fahrradrahmen ausgebildet, wobei die Öffnung des Fahrradrahmens vorzugsweise mittels der beiden voneinander beabstandeten freien Enden ausgebildet ist, zwischen denen das dafür vorgesehene Hinterrad angeordnet und/oder lösbar befestigt werden kann. Vorteilhafterweise kann somit der Material- und Arbeitsaufwand bei der Produktion des Fahrradrahmens reduziert werden. Demnach kann der Fahrradrahmen beispielsweise im Rahmen eines Biegeverfahrens aus einem einzigen Grundrohr derart gebogen werden, dass die entsprechend zueinander angeordneten, insbesondere zumindest vier, Rohrabschnitte ausgebildet werden.

Vorteilhaft ist es, wenn der Fahrradrahmen, insbesondere das Rohrprofil, aus einem einzigen, insbesondere im Wesentlichen geradlinigen, Grundrohr gebogen ist. Hierdurch können Schweißnähte im jeweiligen Verbindungsbereich der einzelnen zueinander benachbarten Rohrabschnitte entfallen, da deren Verbindung durch einen jeweiligen Biegebereich ausgebildet ist. Infolgedessen kann der Produktionsaufwand und die Produktionszeit des Fahrradrahmens reduziert werden.

Aus vorstehend genannten Gründen ist es ferner vorteilhaft, wenn zwischen dem ersten und zweiten Rohrabschnitt ein erster Biegebereich, zwischen dem zweiten und dritten Rohrabschnitt ein zweiter Biegebereich und/oder zwischen dem dritten und vierten Rohrabschnitt ein dritter Biegebereich ausgebildet ist. Infolgedessen ist die obere Hinterradstrebe, das Oberrohr, das Unterrohr und die untere Hinterradstrebe zusammen als ein Teil ausgebildet. Die Biegebereiche bilden hierbei die jeweilige Verbindung zwischen den jeweils zueinander benachbarten Rohrabschnitten aus.

Um dem Fahrradrahmen die nötige Stabilität und/oder Flexibilität zu verleihen, ist es vorteilhaft, wenn zumindest einer der Rohrabschnitte, insbesondere in der Seitenansicht, konvex und/oder konkav gebogen ist.

Zur einfachen und schnellen Montage der übrigen Fahrradkomponenten, ist es vorteilhaft, wenn der Fahrradrahmen einen ersten Befestigungsbereich für eine Satteleinheit, der vorzugsweise im Bereich des ersten Biegebereiches angeordnet ist, einen zweiten Befestigungsbereich für eine Lenkereinheit, der vorzugsweise im Bereich des zweiten Biegebereiches angeordnet ist, und/oder einen dritten Befestigungsbereich für eine Pedaleinheit, der vorzugsweise im Bereich des dritten Biegebereiches angeordnet ist, aufweist. Vorzugsweise umfasst die Satteleinheit ein Sattelrohr und/oder eine Sattelstütze, wobei die Sattelstütze zum Einstellen der Sattelhöhe vorzugsweise beweglich im Sattelrohr angeordnet ist. Des Weiteren umfasst die Lenkereinheit vorzugsweise ein Lenkerrohr, in dem eine Gabel und/oder ein Lenker drehbar gelagert aufnehmbar ist. Die Pedaleinheit umfasst im Wesentlichen ein Tretlagergehäuse, ein darin angeordnetes Lager und/oder über das Lager drehbar mit dem Tretlagergehäuse verbundene Pedale.

Vorteilhaft ist es, wenn der Fahrradrahmen in der Seitenansicht nur einen einzigen, insbesondere durch den ersten, zweiten, dritten und vierten Rohrabschnitt umrandeten, Innenraum aufweist. Infolgedessen weist der Fahrradrahmen einen einzigen gemeinsamen Innenraum auf, so dass zwischen dem ersten Befestigungsbereich für die Satteleinheit und dem dritten Befestigungsbereich für die Pedaleinheit keine zusätzliche Verbindung besteht. Bei aus dem Stand der Technik bekannten Rahmen erstreckt sich im Gegensatz dazu das Sattelrohr von der Pedaleinheit ausgehend durch diesen Innenraum nach oben in Richtung der Satteleinheit. Hierdurch wird der durch den Rahmen gebildete Innenraum in zwei voneinander getrennte Innenräume unterteilt. Wie bereits vorstehend ausgeführt, ist bei dem vorgeschlagenen Fahrradrahmen der Innenraum in der Seitenansicht nicht unterteilt, sondern ist als ein einziger, gemeinsamer und/oder zusammenhängender Innenraum ausgebildet. Hierdurch kann der Verbindungsbereich zwischen der oberen Hinterradstrebe und dem Oberrohr flexibel ausgebildet werden, so dass insbesondere der erste Befestigungsbereich für die Satteleinheit im Wesentlichen in vertikaler Richtung gegenüber dem dritten Befestigungsbereich für die Pedaleinheit federn kann. Als Folge hiervon kann der Fahrkomfort ohne zusätzliche aufwendige Federeinrichtungen erhöht werden. Des Weiteren kann der Fahrradrahmen hierdurch mit wenig Material und somit leicht ausgebildet werden.

Vorteilhaft ist es, wenn in zumindest einem der Befestigungsbereiche, insbesondere am Außenumfang des Rohrprofils, ein Aufnahmemittel zur Aufnahme der Satteleinheit, der Lenkereinheit und/oder der Pedaleinheit lösbar, insbesondere kraft- und/oder formschlüssig, befestigt ist. Hierdurch kann eine Schwächung der Struktur des Fahrradrahmens, insbesondere durch Schweißungen und/oder Bohrungen zum Befestigen der jeweiligen Einheiten, vermieden werden. Des Weiteren können hierdurch Wartungs- und/oder Umrüstarbeiten einfach und schnell durchgeführt werden. Demnach kann sehr schnell und einfach die Pedal-, Lenker- und/oder Satteleinheit durch eine entsprechend anders geartete Einheit ausgetauscht oder im Schadensfall mit einer identischen ersetzt werden. Dadurch, dass der Fahrradrahmen kein durch den Innenraum gehendes Sattelrohr aufweist, darf dessen Struktur nicht noch zusätzlich durch Aussparungen, Bohrungen und/oder Schweißungen zum Anbringen der Sattel-, Lenker- und/oder Pedaleinheit geschwächt werden. Hierfür sind die in den Befestigungsbereichen jeweils angeordneten Aufnahmemitteln geeignet.

Vorteilhaft ist es, wenn die Aufnahmemittel zur Aufnahme der jeweiligen Einheit ausgebildet sind. Demnach ist es vorteilhaft, wenn zumindest ein Teil der Satteleinheit, insbesondere das Sattelrohr, fest, insbesondere stoffschlüssig, mit dem jeweiligen Aufnahmemittel verbunden ist. Zusätzlich oder alternativ ist es ebenso vorteilhaft, wenn das Teil der Satteleinheit, insbesondere das Sattelrohr, einteilig mit dem Aufnahmemittel ausgebildet ist. Auch ist es vorteilhaft, wenn zumindest ein Teil der Lenkereinheit, insbesondere ein Lenkerrohr, und/oder der Pedaleinheit, insbesondere das Tretlagergehäuse, fest, insbesondere stoffschlüssig, mit dem jeweiligen Aufnahmemittel verbunden ist. Zusätzlich oder alternativ ist es ebenso vorteilhaft, wenn zumindest ein Teil der Lenkereinheit und/oder der Pedaleinheit einteilig mit dem jeweiligen Aufnahmemittel ausgebildet ist.

In einer vorteilhaften Weiterbildung der Erfindung umfasst das Aufnahmemittel zumindest ein Teil, das den Außenumfang des Rohrprofils zumindest teilweise umgreift und/oder in Umfangsrichtung des Rohrprofils lösbar an diesem befestigt ist. Das zumindest eine Teil des Aufnahmemittels kann hierbei aus einem Federstahl ausgebildet sein und/oder auf den Außenumfang des Rohrprofils aufgeklipst werden. Zusätzlich kann das sich nur teilweise um den Außenumfang erstreckende Teil des Aufnahmemittels mittels eines Schnellverschlusses drehfest und/oder verschiebefest am Rohrprofil befestigbar sein.

Zusätzlich oder alternativ ist es ferner vorteilhaft, wenn das Aufnahmemittel einen ersten und/oder einen zweiten Teil umfasst, die den Außenumfang des Rohrprofils jeweils teilweise umgreifen und/oder in Umfangsrichtung des Rohrprofils lösbar miteinander verbunden sind. Hierdurch wirkt das Aufnahmemittel als Rohrschelle, wobei die beiden Teile über Scharniere miteinander verbunden sein können. Dies gewährleistet wiederum eine sehr schnelle und einfache Montage sowie Demontage der Aufnahmemittel.

Vorteilhaft ist es, wenn das Aufnahmemittel als Rohrschelle ausgebildet ist und/oder zum kraft- und/oder formschlüssigen Verbinden mit dem Rohrprofil in Umfangsrichtung verspannbar ist. Hierdurch kann das Aufnahmemittel sehr kostengünstig hergestellt werden sowie schnell und einfach am Rohrprofil angebracht und wieder demontiert werden.

Um ein Verdrehen und/oder Verschieben des Aufnahmemittels aus dem Befestigungsbereich bei Krafteinwirkung vermeiden zu können, ist es vorteilhaft, wenn die Position des Aufnahmemittels in Längs- und/oder Umfangsrichtung des Rohrprofils zumindest in einer Richtung formschlüssig festgelegt ist. Eine in Längs- und/oder Umfangsrichtung ausgebildete formschlüssige Verbindung zwischen dem Aufnahmemittel und dem Rohrprofil kann beispielsweise mittels eines Anschlags ausgebildet werden. Der Anschlag ist hierbei vorzugsweise einteilig mit dem Rohrprofil, insbesondere durch eine sich in Umfangsrichtung erstreckende Aufwölbung, ausgebildet. Alternativ kann der Anschlag aber auch stoffschlüssig, insbesondere durch Schweißen, mit dem Rohrprofil verbunden sein.

Zusätzlich oder alternativ ist es ebenso denkbar, dass die in Längs- und/oder Umfangsrichtung ausgebildete formschlüssige Verbindung zwischen dem Rohrprofil und dem Aufnahmemittel durch eine entsprechend ausgebildete Innenkontur des Aufnahmemittels bewirkt wird. Demnach ist es vorteilhaft, wenn die Innenkontur des Aufnahmemittels gemäß der Negativform des jeweils zugeordneten Biegebereiches ausgebildet ist. Hierbei schmiegt sich die Innenkontur des Aufnahmemittels formschlüssig an die Außenkontur des Biegebereiches, so dass eine Verschiebung des Aufnahmemittels gegenüber dem Rohrprofil in dessen Längs- und/oder Umfangsrichtung im Wesentlichen ausgeschlossen ist. Infolgedessen verschiebt und/oder verdreht sich beispielsweise die Satteleinheit nicht, wenn ein Radfahrer auf dem Sattel Platz nimmt.

Auch ist es vorteilhaft, wenn das erste und zweite freie Ende jeweils ein Langloch zur Aufnahme des dafür vorgesehenen Hinterrades aufweisen. Hierdurch kann eine einfache Montage des Hinterrades sichergestellt werden. Des Weiteren kann das Hinterrad im Umfang der Länge des Langloches derart verschoben werden, dass eine Straffung der Fahrradkette erfolgt.

In einer vorteilhaften Weiterbildung der Erfindung weist zumindest einer der Rohrabschnitte, insbesondere der erste und/oder vierte Rohrabschnitt, einen Federbereich auf. Der Federbereich ist vorzugsweise durch eine Querschnittsverjüngung des Rohrprofils im entsprechenden Rohrabschnitt ausgebildet. Vorteilhafterweise kann hierdurch eine Dämpfung erzielt werden, so dass Geländeunebenheiten ausgeglichen werden, wodurch der Fahrkomfort verbessert werden kann.

Auch ist es vorteilhaft, wenn das Rohrprofil aus Aluminium hergestellt ist. Hierdurch kann der Fahrradrahmen sehr leicht ausgebildet werden. Alternativ ist es ebenso vorteilhaft, wenn das Rohrprofil aus Stahl hergestellt ist, da hierdurch die Stabilität des Fahrradrahmens erhöht werden kann.

Auch ist es vorteilhaft, wenn das Rohrprofil, insbesondere im Wesentlichen über seine gesamte Länge, eine konstante Wanddicke aufweist. Hierdurch können die Herstellungskosten des Fahrradrahmens reduziert werden, da der Fahrradrahmen aus einem einzigen Basisrohr gebogen werden kann.

Eine weitere vorteilhafte Weiterentwicklung ist, wenn im Inneren des Rohrprofils, insbesondere im Bereich zumindest eines Biegebereichs, ein Einsatz zum bereichsweise Verstärken des Rohrprofils angeordnet ist. Vorzugsweise ist der Einsatz aus einem Hohlmaterial, insbesondere einem Rohr, und/oder einem Vollmaterial ausgebildet. Vorzugsweise erstreckt sich der Einsatz über zumindest einen Abschnitt und/oder über den Biegebereich des Rohrprofils hinaus und/oder liegt zumindest teilweise an der Innenseite des Rohrprofils an. Der Einsatz ist vorzugsweise in das Rohrprofil kraftschlüssig eingepresst.

Der Einsatz kann dazu angeordnet werden, um eine Erhöhung der Stabilität im Bereich des zumindest einen Biegebereichs zu bewirken. Bei der Fahrt mit dem Fahrrad treten durch das Gewicht eines sitzenden Fahrers auf einem Sattel Biegekräfte auf, die z.B. auf den Biegebereich in der Umgebung der Lenkereinheit wirken. Dabei nimmt der Einsatz einen Teil dieser Biegekräfte auf, die ohne den Einsatz nur auf das Rohrprofil wirken würden. Der Einsatz erhöht somit die Stabilität des Fahrradrahmens. Um Masse einzusparen kann der Einsatz aus einem Hohlmaterial, z.B. einem Rohr, ausgebildet sein. Um dagegen die Stabilität weiter zu erhöhen, kann der Einsatz auch aus einem Vollmaterial, d.h. aus einem durchgehenden Material, ausgebildet sein. Natürlich kann auch eine Kombination aus Hohl- und Vollmaterial benutzt werden. So kann z.B. an Stellen, an dem die Biegekräfte auf das Rohrprofil ein Maximum erreichen, der Einsatz als Vollmaterial ausgebildet sein und an weniger belasteten Stellen kann Material eingespart werden und der Einsatz in ein Hohlmaterial übergehen. Daneben kann auch die Struktur des Einsatzes verändert werden. Denkbar wäre eine Bienenwabenstruktur im Inneren des Einsatzes, da diese Struktur ein gutes Stabilitäts-GewichtsVerhältnis aufweist.

Wenn sich der Einsatz zumindest abschnittsweise und/oder über den Biegebereich hinaus erstreckt, hat das für die Festigkeit und das Gewicht der Fahrradrahmens ebenfalls positive Auswirkungen. Die abschnittsweise Ausbildung des Einsatzes verringert das Gewicht und es können Abschnitte des Einsatzes gezielt an den Stellen mit der größten Belastung angeordnet werden. Des Weiteren kann eine weitere Erhöhung der Biegefestigkeit erreicht werden, wenn sich der Einsatz über den Biegebereich hinaus erstreckt.

Der Kontakt des Einsatzes mit der Innenseite des Rohrprofils hängt von der Form und Größe des Einsatzes mit der Form und Größe des Rohrprofils ab. Wenn der Einsatz als Vierkantrohr und das Rohrprofil aus einem runden Rohr ausgebildet ist, und die Ausmaße zusammen passen, hat der Einsatz nur teilweise Kontakt mit der Innenseite des Rohrprofils. Falls Einsatz und Rohrprofil rund sind, und ebenfalls die Ausmaße zusammen passen, ist ein vollflächiger Kontakt in Umfangsrichtung des Einsatzes mit der Innenseite des Rohrprofils gegeben. Natürlich kann auch jede andere denkbare Form des Einsatzes und/oder Rohrprofils realisiert werden.

Vorteilhaft ist es auch, wenn das Tretlagergehäuse aus einem Tretlagerrohr ausgebildet und/oder auf das Rohrprofil aufgesteckt ist, wobei das Tretlagerrohr vorzugsweise in Querrichtung eine Durchgangsöffnung aufweist, durch die sich das Rohrprofil erstreckt, das Tretlagerrohr im dritten Befestigungsbereich angeordnet ist und/oder zumindest teilweise Kontakt zum Tretlagerrohr aufweist. Die Möglichkeit des Aufsteckens des Tretlagerrohrs erleichtert dabei die Herstellung und erhöht die Stabilität des Fahrradrahmens. Das Tretlagerrohr wird dabei in einem separaten Arbeitsschritt hergestellt und nicht aufwendig aus dem Material des Rohrprofils ausgebildet. Ebenfalls ist für das Aufstecken keine Beeinträchtigung des Rohrprofils nötig, da z.B. keine Bohrungen, zur Befestigung für das Tretlagergehäuse, in dem Rohrprofil nötig sind. Für den Fall, dass die Durchgangsöffnung durch eine runde Bohrung und das Rohrprofil z.B. elliptisch ausgebildet ist, weist das Rohrprofil zur Bohrung des Tretlagerrohrs nur einen teilweisen Kontakt auf.

Ebenfalls von Vorteil ist es, wenn der zweite Biegebereich eine erste Aussparung, benachbart zum Unterrohr, und eine zweite Aussparung, benachbart zum Oberrohr, aufweist, die zueinander kongruent sind, so dass das Lenkerrohr durch diese durchführbar und/oder im Inneren des Rohrprofils drehbar lagerbar ist. Dies erspart das Anbringen einer zusätzlichen Lenkereinheit am Rohrprofil, was zu einer Verringerung der Kosten und zu einer Gewichtsreduktion führt. Dabei ist es auch denkbar, dass sich die Aussparung bis in den Einsatz erstreckt. Falls der Einsatz einen Abschnitt aufweist, der zwischen den beiden Aussparungen angeordnet ist, führt das Lenkerrohr ebenfalls durch den Einsatz. Es ist für die drehbare Lagerung von Vorteil, wenn eine Vorrichtung zur Aufnahme des Lenkerrohrs in dem Rohrprofil und/oder in dem Einsatz vorhanden ist. Dies kann ein Kugellager sein, das das Lenkerrohr drehbar aufnimmt.

Vorgeschlagen wird ein Fahrrad mit einem Fahrradrahmen. Der Fahrradrahmen umfasst eine obere Hinterradstrebe, ein Oberrohr, ein Unterrohr und eine untere Hinterradstrebe. Der Fahrradrahmen nimmt ein Hinterrad drehbar gelagert auf. Der Fahrradrahmen ist gemäß der vorangegangenen Beschreibung ausgebildet, wobei die genannten Merkmale einzeln oder in beliebiger Kombination vorhanden sein können.

Des Weiteren wird ein Verfahren zur Herstellung eines Fahrradrahmens vorgeschlagen, bei welchem ein Rohrprofil aus einem, insbesondere geradlinigen, Grundrohr gebogen wird, so dass ein erstes und zweites freies Ende des Rohrprofils derart voneinander beabstandet sind, dass zwischen diesen beiden in Querrichtung zum Fahrradrahmen ein dafür vorgesehenes Hinterrad drehbar aufnehmbar ist.

Um die Herstellungskosten des Fahrradrahmens möglichst gering zu halten, ist dieser, insbesondere dessen Rohrprofil, einteilig ausgebildet. Hierdurch müssen die einzelnen Teile des Fahrradrahmens nicht, z.B. durch Schweißen, miteinander verbunden werden. Ein einteiliges Grundrohr genügt, um daraus durch ein Biegeverfahren ein Fahrradrahmen herzustellen, sodass damit zwischen den beiden Enden des Fahrradrahmens das Hinterrad drehbar aufnehmbar ist.

Eine vorteilhafte Weiterbildung zur Herstellung des Fahrradrahmens ist, wenn vor dem Biegen des Grundrohres zumindest ein Einsatz im Inneren des Grundrohres, insbesondere in einem Biegebereich, angeordnet wird, dass das Grundrohr im Bereich der beiden Enden des Einsatzes und/oder im Bereich des Einsatzes gebogen wird und/oder dass der Einsatz mitgebogen wird. Abhängig von der Form des Einsatzes ist das Einsetzen des Einsatzes nur im ungebogenen Zustand des Grundrohres möglich. Ein vorheriges Einbringen des Einsatzes vor dem Biegen des Grundrohres lässt damit die Möglichkeit offen, den Einsatz je nach Position und Ausdehnung im Grundrohr mitzubiegen. Somit kann der Einsatz z.B. im Bereich des zweiten Biegebereichs angeordnet werden, um so eine Verstärkung des Rohrprofils in diesem Bereich zu erzielen.

Daneben ist auch von Vorteil, wenn, insbesondere vor dem Biegen des Grundrohres, ein Tretlagerrohr über ein freies Ende auf das Grundrohr oder Rohrprofil geschoben wird und in einem Befestigungsbereich des Rohrprofils für die Pedaleinheit befestigt wird. Ein vorheriges darüber schieben des Tretlagerrohrs ist vor dem Biegen einfacher bzw. ist nur im ungebogenen Zustand des Grundrohres möglich, da ein schon vorhandener Biegeradius das darüber Schieben verhindern kann. Außerdem ist ein Befestigen des Tretlagerrohres an dem ungebogenen Zustand des Grundrohrs vorteilhafter als an einem Rohrprofil welches bereits zum Fahrradrahmen gebogen ist, da dadurch eine bessere Erreichbarkeit des Arbeitsbereiches am Fahrradrahmen gegeben ist und damit die Montage vereinfacht wird.

Ebenfalls ist es von Vorteil, wenn im zweiten Biegebereich eine erste Aussparung, benachbart zum Unterrohr, und eine zweite Aussparung, benachbart zum Oberrohr, ausgebildet ist, die zueinander kongruent sind, so dass ein Lenkerrohr durch diese durchgeführt und/oder im Inneren des Rohrprofils drehbar gelagert werden kann. Durch das Hindurchführen des Lenkerrohrs durch die Aussparungen und somit durch das Rohrprofil kann ein zusätzliche Lenkereinheit eingespart werden, was zum einen zu einer Gewichtseinsparung führt und zum anderen zu einer Einsparung weiterer Komponenten die nicht konstruiert und/oder gefertigt werden müssen. Beides führt für den Verbraucher zu einer Kostenreduzierung und zu einer Vereinfachung der Wartung, da zusätzliche Komponenten der Lenkereinheit nicht benötigt werden. Da die Möglichkeit besteht, im zweiten Biegebereich einen Einsatz anzuordnen, kann das Lenkerrohr auch durch diesen Einsatz führen. Es ist für die drehbare Lagerung von Vorteil, wenn eine Vorrichtung zur Aufnahme des Lenkerrohrs in dem Rohrprofil und/oder in dem Einsatz vorhanden ist. Dies kann ein Kugellager sein, das das Lenkerrohr drehbar aufnimmt. Die beiden Aussparungen können nach dem Biegen durch eine axiale Bohrung oder durch Abschneiden eines Teils des äußeren Radius des Biegebereichs ausgebildet werden.

Weitere Vorteile der Erfindung sind in den nachfolgenden Ausführungsbeispielen beschrieben. Es zeigt:
- **Figur 1**: ein Fahrrad mit einem einteilig gebogenen Fahrradrahmen in der Seitenansicht,
- **Figur 2**: eine Draufsicht des Fahrrads,
- **Figur 3**: eine Detailansicht des Fahrradrahmens im Bereich einer Satteleinheit,
- **Figur 4**: eine Schnittzeichnung eines Ausschnitts des Fahrradrahmens im Bereich eines zweiten Biegebereichs mit einem Einsatz,
- **Figur 5**: eine Schnittzeichnung eines Ausschnitts des Fahrradrahmens im Bereich des zweiten Biegebereichs mit dem Einsatz und einem Lenkerrohr, und
- **Figur 6**: eine Draufsicht der Fahrradrahmens im Bereich der Pedaleinheit.

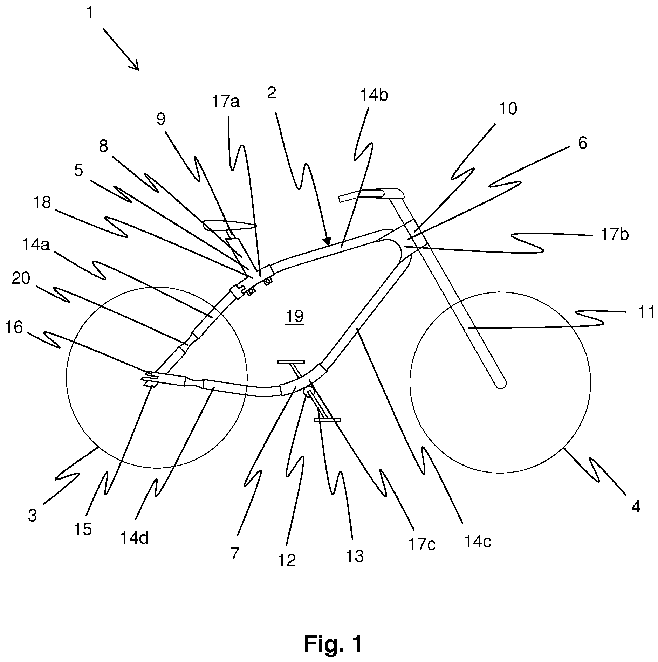

Figur 1 zeigt ein Fahrrad in der Seitenansicht. Das Fahrrad umfasst ein Hinterrad 3 und ein Vorderrad 4 zwischen denen ein Fahrradrahmen 2 angeordnet ist. Der Fahrradrahmen 2 nimmt das Hinterrad 3 drehbar gelagert auf. Des Weiteren umfasst das Fahrrad 1 eine Satteleinheit 5, eine Lenkereinheit 6 sowie eine Pedaleinheit 7. Die Satteleinheit 5 umfasst ein Sattelrohr 8. In dem Sattelrohr 8 ist eine Sattelstütze 9 angeordnet. Die Sattelstütze 9 ist gegenüber dem Sattelrohr 8 in dessen Längsrichtung zur Einstellung der Sattelhöhe verschiebbar und/oder in unterschiedlichen Positionen arretierbar. Die Lenkereinheit 6 umfasst ein Lenkerrohr 10. In dem Lenkerrohr ist eine Lenkergabel 11 drehbar gelagert. Die Lenkergabel 11 nimmt wiederum das Vorderrad 4 drehbar gelagert auf. Die Pedaleinheit 7 umfasst ein Tretlagergehäuse 12. Dieses nimmt zwei zueinander versetzte Pedalkurbeln 13 - von denen lediglich eine mit einem Bezugszeichen versehen ist - drehbar gelagert auf.

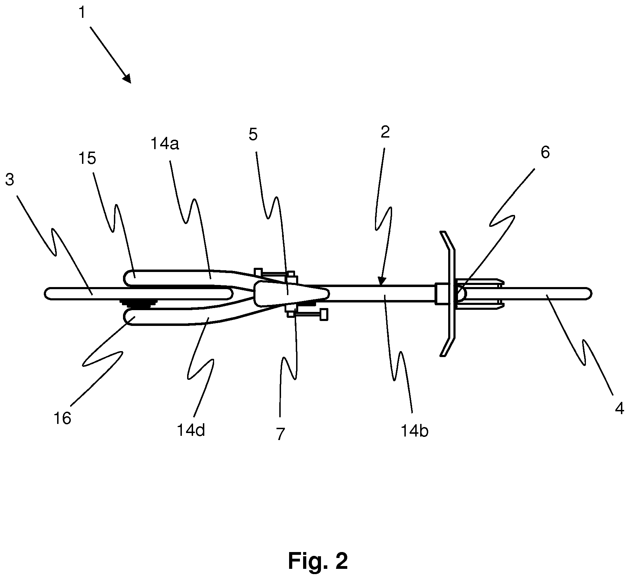

Der Fahrradrahmen 2 ist aus einem einzigen Grundrohr gebogen. Der Fahrradrahmen 2 ist somit einteilig ausgebildet und umfasst demnach nicht mehrere miteinander verbundene, insbesondere verschweißte, Rohrteile. Der Fahrradrahmen 2 ist derart gebogen, dass mehrere Rohrabschnitt 14a - 14d ausgebildet sind. Der erste Rohrabschnitt 14a und der letzte Rohrabschnitt 14d weisen jeweils ein freies Ende 15, 16 auf. Die beiden freien Enden 15, 16 des Fahrradrahmens 2 sind im Bereich des Hinterrades 3 derart angeordnet, dass sie sich an jeweils unterschiedlichen Seiten des Hinterrades 3 befinden. Gemäß Figur 2 sind die beiden freien Enden 15, 16 somit derart in Querrichtung des Fahrradrahmens 2 voneinander beabstandet, dass das Hinterrad 3 zwischen diesen beiden drehbar gelagert aufnehmbar ist.

Gemäß Figur 1 ist der einteilige Fahrradrahmen 2 derart gebogen, dass ein erster Rohrabschnitt 14a eine obere Hinterradstrebe des Rahmens, ein zweiter Rohrabschnitt 14b ein Oberrohr des Fahrradrahmens, ein dritter Rohrabschnitt 14c ein Unterrohr des Fahrradrahmens und/oder ein vierte Rohrabschnitt 14d eine untere Hinterradstrebe des Fahrradrahmens 2 ausbildet. Der Fahrradrahmen 2 weist jeweils zwischen zwei zueinander benachbarten Rohrabschnitten 14a - 14d einen Biegebereich 17a - 17c auf. Im vorliegenden Ausführungsbeispiel umfasst der Fahrradrahmen 2 einen ersten Biegebereich 17a, der zwischen dem ersten und zweiten Rohrabschnitt 14a, 14b ausgebildet ist. In diesem Bereich ist die Satteleinheit 5 lösbar mit dem Fahrradrahmen 2 verbunden. Des Weiteren weist der Fahrradrahmen 2 zwischen seinem zweiten Rohrabschnitt 14b und seinem dritten Rohrabschnitt 14c einen zweiten Biegebereich 17b auf. In diesem ist die Lenkereinheit 6 lösbar mit dem Fahrradrahmen 2 verbunden. Ein dritter Biegebereich 17c ist zwischen dem dritten Rohrabschnitt 14c und vierten Rohrabschnitt 14d angeordnet. In diesem dritten Biegebereich 17c ist die Pedaleinheit 7 lösbar mit dem Fahrradrahmen 2 verbunden. Hierbei wirken die Biegebereiche 17a - 17c als Befestigungsbereiche zum lösbaren Befestigen der Sattel- 5, Lenker-6 und/oder Pedaleinheit 7. In einem hier nicht dargestellten alternativ Ausführungsbeispiel können die Befestigungsbereiche zum lösbaren Befestigen der Satteleinheit 5, der Lenkereinheit 6 und/oder der Pedaleinheit 7 aber auch von dem jeweils zugeordneten Biegebereich 17a - 17c beabstandet in einem benachbarten Rohrabschnitt 14a - 14c angeordnet sein.

In den Befestigungsbereichen - die im vorliegenden Ausführungsbeispiel in den Biegebereichen 17a - 17c des Fahrradrahmens 2 ausgebildet sind - sind mit dem Fahrradrahmen 2 lösbar verbundene Aufnahmemittel 18 angeordnet, von denen zur Wahrung der Übersichtlichkeit in Figur 1 lediglich eines mit einem Bezugszeichen versehen ist. Die Aufnahmemittel 18 sind lösbar am Außenumfang des Rohrprofils des Fahrradrahmens 2 befestigt. Die Befestigung erfolgt kraft- und/oder formschlüssig.

Im vorliegenden Ausführungsbeispiel sind die Aufnahmemittel 18 als Rohrschelle ausgebildet. Des Weiteren ist jeweils zumindest ein Teil der jeweils zugeordneten Satteleinheit 5, Lenkereinheit 6 und/oder Pedaleinheit 7 fest und/oder starr mit dem Aufnahmemittel 18 verbunden. Diese feste und/oder starre Verbindung kann beispielsweise durch eine einteilige Ausbildung des Aufnahmemittels 18 mit dem jeweiligen Teil der jeweiligen Satteleinheit 5, Lenkereinheit 6 und/oder Pedaleinheit 7 erfolgen. Alternativ kann das Teil der jeweiligen Satteleinheit 5, Lenkereinheit 6 und/oder Pedaleinheit 7 mit dem jeweils zugeordneten Aufnahmemittel 18 verschweißt sein. Demnach ist beispielsweise im Falle der Satteleinheit 5 das Sattelrohr 8 starr mit dem zugeordneten Aufnahmemittel 18 ausgebildet. Im Falle der Lenkereinheit 6 ist das Lenkerrohr 10 fest mit dem jeweils zugeordneten Aufnahmemittel 18 ausgebildet. Des Weiteren ist das Tretlagergehäuse 12 der Pedaleinheit 7 starr mit dem jeweils zugeordneten Aufnahmemittel 18 verbunden.

Gemäß Figur 1 ist der Fahrradrahmen 2 derart gebogen, dass er einen einzigen zusammenhängenden Innenraum 19 ausbildet. Hierfür erstreckt sich das Sattelrohr 8 der Satteleinheit 5 nicht bis in den Innenraum 19 hinein. Das Sattelrohr 8 bildet somit keine zusätzliche Verbindung zwischen der Satteleinheit 5 und der Pedaleinheit 7. Hierdurch kann der erste Biegebereich 17a gegenüber dem dritten Biegebereich 17c im Wesentlichen in Hochrichtung des Fahrrads 1 federnd ausgebildet werden. Des Weiteren kann der Fahrradrahmen 2 somit sehr leicht ausgebildet werden, da das Sattelrohr 8 sehr kurz ausgebildet werden kann, wodurch Material und zugleich Gewicht eingespart wird.

Um den Fahrkomfort zu verbessern weist der Fahrradrahmen 2 in seinem ersten und vierten Rohrabschnitt 14a, 14d jeweils einen Federbereich 20 auf, von denen in Figur 1 nur einer mit einem Bezugszeichen versehen ist. Der Federbereich 20 ist im vorliegenden Ausführungsbeispiel durch eine entsprechend ausgebildete Querschnittsverjüngung des Rohrprofils ausgebildet.

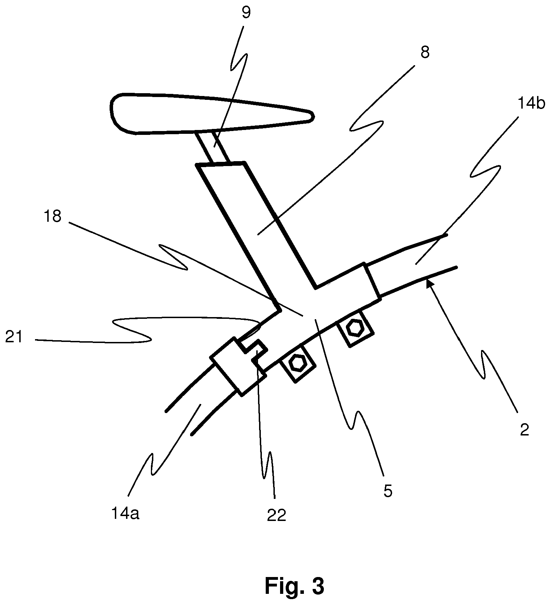

Figur 3 zeigt exemplarisch einen Ausschnitt des Fahrrads 1 im Bereich seiner Satteleinheit 5. Wie dieser Detailansicht zu entnehmen ist, weist der Fahrradrahmen 2 einen ersten Anschlag 21 auf, mittels dem die Position des Aufnahmemittels 18 in Längsrichtung des Rohrprofils in einer ersten Richtung festgelegt ist. Hierdurch kann ein Verrutschen des Aufnahmemittels 18 entlang des Rohrprofils, insbesondere aus dem Biegebereich 17a heraus in Richtung des ersten Rohrabschnitt 14a, vermieden werden. Zusätzlich oder alternativ ist es ebenso denkbar, dass auf der gegenüberliegenden Seite des Aufnahmemittels 18 ein hier nicht dargestellter weiterer Anschlag angeordnet ist, mittels dem ein verrutschen in eine zweite Richtung, nämlich in Richtung des zweiten Rohrabschnitt 14b, vermieden wird.

Des Weiteren umfasst der Fahrradrahmen 2 einen zweiten Anschlag 22, mittels dem ein Verdrehen des Aufnahmemittels 18 gegenüber dem Rohrprofil vermieden wird. Hierbei greift ein den zweiten Anschlag 22 ausbildender Vorsprung in eine Vertiefung des Aufnahmemittels 18 ein. Das Aufnahmemittel 18 ist somit über den zweiten Anschlag 22 drehfest mit dem Rohrprofil des Fahrradrahmens 2 gekoppelt. Selbstverständlich es auch ebenso denkbar, dass das jeweilige Aufnahmemittel 18 der Lenkereinheit 6 und/oder der Pedaleinheit 7 mit zumindest einem der vorstehend genannten Anschläge ausgebildet ist.

Zusätzlich oder alternativ kann die formschlüssige Festlegung des Aufnahmemittels 18 im jeweiligen Befestigungsbereich, insbesondere im vorliegenden Ausführungsbeispiel im jeweiligen Biegebereich 17a - 17c, über eine entsprechend ausgebildete Innenkontur des Aufnahmemittels 18 bewirkt werden. Demnach ist beispielsweise gemäß Figur 1, insbesondere der zweite Biegebereich 17b, derart gebogen, dass das Aufnahmemittel 17 auch ohne einen zusätzlichen Anschlag in Längsrichtung des Rohrprofils bzw. des Fahrradrahmens 2 rutschfest festgelegt werden kann. Hierfür entspricht die Innenkontur des Aufnahmemittels 18 der Negativform des jeweiligen Biegebereiches 17b.

Gemäß Figur 1 bildet die obere Hinterradstrebe, das Oberrohr, das Unterrohr und die untere Hinterradstrebe den - nicht nochmals unterteilten - zusammenhängenden Innenraum 19 aus. Es liegt somit keine Unterteilung durch eine, wie aus dem Stand der Technik bekanntes, sich in diesen Innenraum 19 hineinerstreckendes Sattelrohr 8 vor.

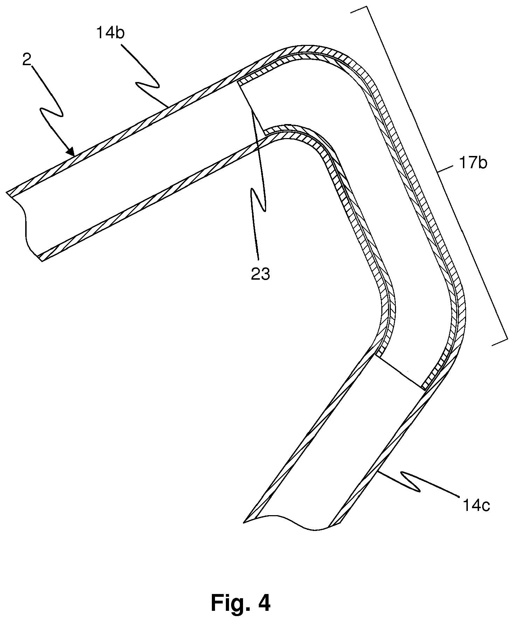

Figur 4 zeigt eine Schnittzeichnung eines Ausschnitts des Fahrradrahmens 2 im Bereich des zweiten Biegebereichs 17b mit einem Einsatz 23. Der Einsatz 23 wurde vor dem Biegen des Fahrradrahmens 2 im Bereich des zweiten Biegebereichs 17b angeordnet. Durch das Biegen wurde der Einsatz 23, mit einem Grundrohr, an einer Stelle die den Übergang zum zweiten Rohrabschnitt 14b, und an einer zweiten Stelle die dem dritten Rohrabschnitt 14c zugewandt ist, mitgebogen. Ein derart angeordneter Einsatz 23 verstärkt somit den zweiten Biegebereich 17b und der Fahrradrahmen 2 kann hier größere Biegekräfte aufnehmen, ohne sich zu verformen.

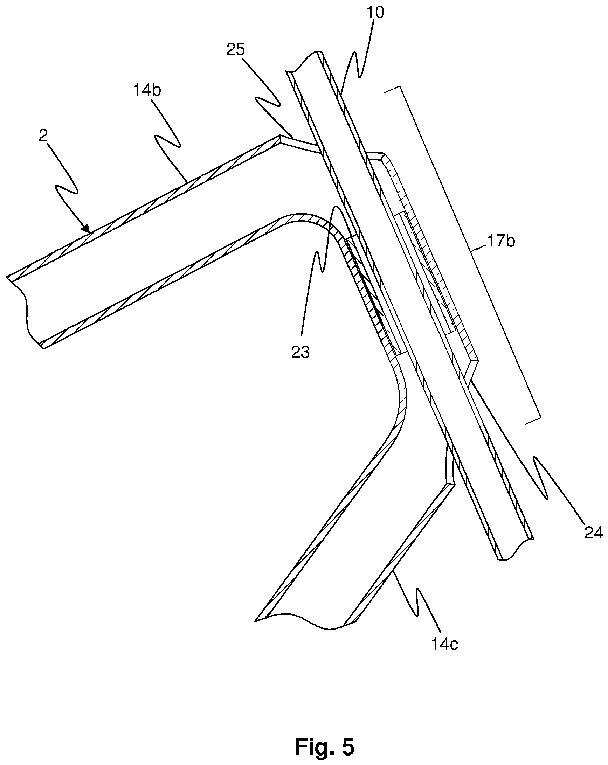

Figur 5 zeigt eine Schnittzeichnung eines Ausschnitts des Fahrradrahmens 2 im Bereich des zweiten Biegebereichs 17b mit dem Einsatz 23 und dem Lenkerrohr 10. Der Einsatz 23 wurde vor dem Biegen des Fahrradrahmens im Bereich des zweiten Biegebereichs 17b angeordnet. Das Grundrohr ist hier oberhalb des Einsatzes 23 gebogen und bildet den Übergang zum zweiten Rohrabschnitt 14b. Außerdem ist das Grundrohr unterhalb des Einsatzes 23 gebogen und bildet den Übergang zum dritten Rohrabschnitt 14c. Des Weiteren ist eine erste Aussparung 24 im zweiten Biegebereich 17b, benachbart zum dritten Rohrabschnitt 14c und eine zweite Aussparung in zweiten Biegebereich 17b, benachbart zum zweiten Rohrabschnitt 14b angeordnet. Zwischen diesen beiden Aussparung 24, 25 ist der Einsatz 23 platziert. Das Lenkerrohr 10 tritt durch die erste Aussparung 24 in das Rohrprofil ein, führt durch den Einsatz 23 und tritt durch die zweite Aussparung 25 wieder aus dem Rohrprofil aus.

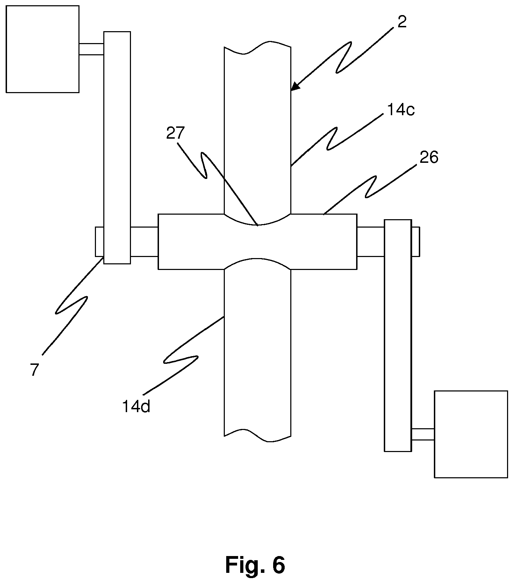

Figur 6 zeigt eine Draufsicht auf den Fahrradrahmen 2 im Bereich der Pedaleinheit 7. Hier ist ein Tretlagerrohr 26 im Bereich des dritten Biegebereichs zwischen drittem Rohrabschnitt 14c und vierten Rohrabschnitt 14d angeordnet. Dabei führt das Rohrprofil durch die Durchgangsöffnung 27 und liegt vollständig an dem Tretlagerrohr 26 an, da der Querschnitt des Rohrprofils rund ist und die Durchgangsöffnung 27 als Bohrung ausgebildet ist. Das Tretlagerrohr 26 dient zur Aufnahme der Pedaleinheit 7.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Fahrrad
- 2: Fahrradrahmen
- 3: Hinterrad
- 4: Vorderrad
- 5: Satteleinheit
- 6: Lenkereinheit
- 7: Pedaleinheit
- 8: Sattelrohr
- 9: Sattelstütze
- 10: Lenkerrohr
- 11: Lenkergabel
- 12: Tretlagergehäuse
- 13: Pedalkurbel
- 14: Rohrabschnitt
- 15: erstes freies Ende
- 16: zweites freies Ende
- 17: Biegebereich
- 18: Aufnahmemittel
- 19: Innenraum
- 20: Federbereich
- 21: Erster Anschlag
- 22: Zweiter Anschlag
- 23: Einsatz
- 24: Erste Aussparung
- 25: Zweite Aussparung
- 26: Tretlagerrohr
- 27: Durchgangsöffnung

## Patentansprüche

1. Fahrradrahmen,
ausgebildet aus einem Rohrprofil,
mit einem als obere Hinterradstrebe ausgebildeten ersten Rohrabschnitt (14a),
einem als Oberrohr ausgebildeten zweiten Rohrabschnitt (14b),
einem als Unterrohr ausgebildeten dritten Rohrabschnitt (14c) und einem als untere Hinterradstrebe ausgebildeten vierten Rohrabschnitt (14d), wobei das Rohrprofil einteilig ausgebildet ist und wobei der erste Rohrabschnitt (14a) ein dem zweiten Rohrabschnitt (14b) abgewandtes erstes freies Ende (15) und der vierte Rohrabschnitt (14d) ein dem dritten Rohrabschnitt (14c) abgewandtes zweites freies Ende (16) aufweist, **dadurch gekennzeichnet,**
**dass** das Rohrprofil aus einem einzigen Grundrohr gebogen ist,
und **dass** die beiden freien Enden (15, 16) in Querrichtung des Fahrradrahmens (2) derart voneinander beabstandet sind, dass zwischen diesen ein dafür vorgesehenes Hinterrad (3) drehbar aufnehmbar ist.

2. Fahrradrahmen nach dem vorherigen Anspruch, **dadurch gekennzeichnet, dass** das Rohrprofil aus einem einzigen geradlinigen Grundrohr gebogen ist und/oder dass zwischen dem ersten und zweiten Rohrabschnitt (14a, 14b) ein erster Biegebereich (17a),
zwischen dem zweiten und dritten Rohrabschnitt (14b, 14c) ein zweiter Biegebereich (17b) und/oder
zwischen dem dritten und vierten Rohrabschnitt (14c, 14d) ein dritter Biegebereich (17c) ausgebildet ist.

3. Fahrradrahmen nach einem oder mehreren der vorherigen Ansprüche, **dadurch gekennzeichnet, dass** der Fahrradrahmen (2) einen ersten Befestigungsbereich für eine Satteleinheit (5), der vorzugsweise im Bereich des ersten Biegebereiches (17a) angeordnet ist,
einen zweiten Befestigungsbereich für eine Lenkereinheit (6), der vorzugsweise im Bereich des zweiten Biegebereiches (17b) angeordnet ist, und/oder
einen dritten Befestigungsbereich für eine Pedaleinheit (7), der vorzugsweise im Bereich des dritten Biegebereiches (17c) angeordnet ist, aufweist.

4. Fahrradrahmen nach einem oder mehreren der vorherigen Ansprüche, **dadurch gekennzeichnet, dass** in zumindest einem der Befestigungsbereiche, insbesondere am Außenumfang des Rohrprofils, ein Aufnahmemittel (18) zur Aufnahme der Satteleinheit (5), der Lenkereinheit (6) und/oder der Pedaleinheit (7) lösbar, insbesondere kraft- und/oder formschlüssig, befestigt ist.

5. Fahrradrahmen nach einem oder mehreren der vorherigen Ansprüche, **dadurch gekennzeichnet, dass** das Aufnahmemittel (18) einen ersten und/oder einen zweiten Teil umfasst, die den Außenumfang des Rohrprofils jeweils teilweise umgreifen und/oder in Umfangsrichtung des Rohrprofils lösbar miteinander verbunden sind.

6. Fahrradrahmen nach einem oder mehreren der vorherigen Ansprüche, **dadurch gekennzeichnet, dass** die Position des Aufnahmemittels (18) in Längs- und/oder Umfangsrichtung des Rohrprofils zumindest in einer Richtung, insbesondere mittels eines Anschlags (21) und/oder mittels einer der Negativform des jeweils zugeordneten Biegebereichs (17) ausgebildeten Innenkontur des Aufnahmemittels (18), formschlüssig festgelegt ist.

7. Fahrradrahmen nach einem oder mehreren der vorherigen Ansprüche, **dadurch gekennzeichnet, dass** zumindest ein Rohrabschnitt (14), insbesondere der erste und/oder vierte Rohrabschnitt (14a, 14d), einen Federbereich (20) aufweist, der vorzugsweise durch eine Querschnittsverjüngung des Rohrprofils ausgebildet ist.

8. Fahrradrahmen nach einem oder mehreren der vorherigen Ansprüchen, **dadurch gekennzeichnet, dass** im Inneren des Rohrprofil, insbesondere im Bereich zumindest eines Biegebereichs (17), ein Einsatz (23) zum Verstärken des Rohrprofils angeordnet ist,
wobei vorzugsweise der Einsatz (23) aus einem Hohlmaterial, insbesondere einem Rohr, und/oder einem Vollmaterial besteht,
sich der Einsatz (23) über zumindest einen Abschnitt und/oder über den Biegebereich (17) des Rohrprofils hinaus erstreckt und/oder
der Einsatz (23) zumindest teilweise an der Innenseite des Rohrprofil anliegt.

9. Fahrradrahmen nach einem oder mehreren der vorherigen Ansprüchen, **dadurch gekennzeichnet, dass** das Tretlagergehäuse (12) aus einem Tretlagerrohr (26) ausgebildet und/oder auf das Rohrprofil aufgesteckt ist, wobei das Tretlagerrohr (26) vorzugsweise in Querrichtung eine Durchgangsöffnung (27) aufweist, durch die sich das Rohrprofil erstreckt, das Tretlagerrohr (26) im dritten Befestigungsbereich angeordnet ist und/oder zumindest teilweise Kontakt zum Tretlagerrohr (26) aufweist.

10. Fahrradrahmen nach einem oder mehreren der vorherigen Ansprüchen, **dadurch gekennzeichnet, dass** der zweite Biegebereich (17b) eine erste Aussparung (24), benachbart zum Unterrohr, und eine zweite Aussparung (25), benachbart zum Oberrohr, aufweist, die zueinander kongruent sind, so dass das Lenkerrohr (10) durch diese durchführbar und/oder im Inneren des Rohrprofils drehbar lagerbar ist.

11. Fahrrad mit
einem Fahrradrahmen (2),
der eine obere Hinterradstrebe, ein Oberrohr, ein Unterrohr und eine untere Hinterradstrebe umfasst und
ein Hinterrad (3) drehbar gelagert aufnimmt,
**dadurch gekennzeichnet, dass**
der Fahrradrahmen (2) nach einem oder mehreren der vorherigen Ansprüche ausgebildet ist.

12. Verfahren zur Herstellung eines Fahrradrahmens, insbesondere nach einem oder mehreren der vorherigen Ansprüche, bei welchem ein Rohrprofil aus einem, insbesondere geradlinigen, Grundrohr gebogen wird, **dadurch gekennzeichnet,**
**dass** das gesamte Rohrprofil aus einem einzigen Grundrohr derart gebogen wird, dass ein erstes und zweites freies Ende (15,16) des Rohrprofils derart voneinander beabstandet sind, dass zwischen diesen beiden in Querrichtung zum Fahrradrahmen (2) ein dafür vorgesehenes Hinterrad (3) drehbar aufnehmbar ist.

13. Verfahren zur Herstellung eines Fahrradrahmens nach dem vorherigen Anspruch, **dadurch gekennzeichnet, dass** vor dem Biegen des Grundrohrs zumindest ein Einsatz (23) im Inneren des Grundrohrs, insbesondere in einem Biegebereich (17), angeordnet wird,
dass das Grundrohr im Bereich der beiden Enden des Einsatzes (23) und/oder im Bereich des Einsatzes (23) gebogen wird und/oder dass der Einsatz (23) mitgebogen wird.

14. Verfahren zur Herstellung eines Fahrradrahmens nach einem oder mehreren der vorherigen Ansprüche 12-13,
**dadurch gekennzeichnet, dass**,
insbesondere vor dem Biegen des Grundrohres, ein Tretlagerrohr (26) über ein freies Ende (15,16) auf das Grundrohr oder Rohrprofil geschoben wird und in einem Befestigungsbereich des Rohrprofils für die Pedaleinheit (7) befestigt wird.

15. Verfahren zur Herstellung eines Fahrradrahmens nach einem oder mehreren der vorherigen Ansprüche 12-14, **dadurch gekennzeichnet, dass** im zweiten Biegebereich (17b) eine erste Aussparung (24), benachbart zum Unterrohr, und eine zweite Aussparung (25), benachbart zum Oberrohr, ausgebildet wird, die zueinander kongruent sind, so dass ein Lenkerrohr (10) durch diese durchgeführt und/oder im Inneren des Rohrprofils drehbar gelagert werden kann.

## Claims

1. A bicycle frame
implemented from a tube profile,
having a first tube segment (14a) implemented as an upper rear wheel strut,
a second tube segment (14b) implemented as a top tube, a third tube segment (14c) implemented as a down tube, and a fourth tube segment (14d) implemented as a lower rear wheel strut, the tube profile being implemented as a single piece, and the first tube segment (14a) comprising a first free end (15) facing away from the second tube segment (14b), and the fourth tube segment (14d) comprising a second free end (16) facing away from the third tube segment (14c),
**characterized in that**
the tube profile is bent from a single base tube,
and that the two free ends (15, 16) are spaced apart from each other in the transverse direction of the bicycle frame (2), such that a rear wheel (3) provided for this purpose can be rotatably received between the same.

2. The bicycle frame according to the preceding claim, **characterized in that** the tube profile is bent from a single, straight base tube and/or that a first bending region (17a) is implemented between the first and second tube segments (14a, 14b),
a second bending region (17b) is implemented between the second and third tube segments (14b, 14c), and/or
a third bending region (17c) is implemented between the third and fourth tube segments (14c, 14d).

3. The bicycle frame according to any one or more of the preceding claims, **characterized in that** the bicycle frame (2) comprises a first attachment region for a saddle unit (5), preferably disposed in the region of the first bending region (17a),
a second attachment region for a handlebar unit (6) preferably disposed in the region of the second bending region (17b), and/or a third attachment region for a pedal unit (7) preferably disposed in the region of the third bending region (17c).

4. The bicycle frame according to any one or more of the preceding claims, **characterized in that** a receiving means (18) for receiving the saddle unit (5), the handlebar unit (6), and/or the pedal unit (7) is releasably attached, particularly by means of a force fit and/or form fit, is attached in at least one of the attachment regions, particularly at the outer circumference of the tube profile.

5. The bicycle frame according to any one or more of the preceding claims, **characterized in that** the receiving means (18) comprises a first and/or a second part each partially enclosing the outer circumference of the tube profile and/or releasably connected to each other in the circumferential direction of the tube profile.

6. The bicycle frame according to any one or more of the preceding claims, **characterized in that** the position of the receiving means (18) in the longitudinal and/or circumferential direction of the tube profile is defined in a form-fit manner in at least one direction, particularly by means of a stop (21) and/or by means of an inner contour of the receiving means (18) implemented as the negative form of the associated bending region (17).

7. The bicycle frame according to any one or more of the preceding claims, **characterized in that** at least one tube segment (14), particularly the first and/or fourth tube segment (14a, 14d), comprises a spring region (20) preferably implemented as a tapering cross section of the tube profile.

8. The bicycle frame according to any one or more of the preceding claims, **characterized in that** an insert (23) for reinforcing the tube profile is disposed in the interior of the tube profile, particularly in the region of at least one bending region (17),
wherein the insert (23) is preferably made of a hollow material, particularly a tube, and/or a solid material; the insert (23) extends beyond at least one segment and/or over the bending region (17) of the tube profile; and/or the insert (23) at least partially makes contact with the inner side of the tube profile.

9. The bicycle frame according to any one or more of the preceding claims, **characterized in that** the bottom bracket housing (12) is formed from a bottom bracket tube (26) and/or is inserted over the tube profile, wherein the bottom bracket tube (26) preferably comprises a pass-through opening (27) in the transverse direction, through which the tube profile extends, the bottom bracket tube (26) is disposed in the third attachment region, and/or partially makes contact with the bottom bracket tube (26).

10. The bicycle frame according to any one or more of the preceding claims, **characterized in that** the second bending region (17b) comprises a first cutout (24) adjacent to the down tube and a second cutout (25) adjacent to the top tube, said cutouts being congruent to each other so that the handlebar tube (10) can be passed through the same and/or can be rotatably supported in the interior of the tube profile.

11. A bicycle having
a bicycle frame (2),
comprising an upper rear wheel strut, a top tube, a down tube, and a lower rear wheel strut and receiving a rotatably supported rear wheel (3), **characterized in that**
the bicycle frame (2) is implemented according to any one or more of the preceding claims.

12. A method for producing a bicycle frame, particularly according to any one or more of the preceding claims, a tube profile being bent from one, particularly straight, base tube, **characterized in that**
the entire tube profile is bent from one single base tube, such that a first and second free end (15,16) of the tube profile are spaced apart from each other such that a rear wheel (3) provided for this purpose can be rotatably received between said two ends in the transverse direction to the bicycle frame (2).

13. The method for producing a bicycle frame according to the preceding claim, **characterized in that** at least one insert (23) is disposed in the interior of the base tube, particularly in a bending region (17), prior to bending the base tube,
that the base tube is bent in the region of the two ends of the insert (23) and/or in the region of the insert (23), and/or that the insert (23) is also bent with the tube.

14. The method for producing a bicycle frame according to any one or more of the preceding claims 12-13,
**characterized in that**,
a bottom bracket tube (26) is placed via a free end (15,16) of the base tube or tube profile, particularly prior to bending the base tube, and is attached in an attachment region of the tube profile for the pedal unit (7).

15. The method for producing a bicycle frame according to any one or more of the preceding claims 12-14,
**characterized in that**
a first cutout (24), adjacent to the down tube, and a second cutout (25), adjacent to the top tube, are implemented in the second bending region (17b) and are congruent to each other, so that a handlebar tube (10) can be passed through the same and/or can be rotatably supported in the interior of the tube profile.

## Revendications

1. Cadre de bicyclette,
formé à partir d'un profilé tubulaire,
avec un premier segment de tube (14a) formé en tant que bras de fourche arrière supérieur,
un second segment de tube (14b) formé en tant que tube supérieur, un troisième segment de tube (14c) formé en tant que tube inférieur et un quatrième segment de tube (14d) formé en tant que bras de fourche arrière inférieur, dans lequel le profilé tubulaire est formé en une pièce et dans lequel le premier segment de tube (14a) présente une première extrémité libre (15) éloignée du second segment de tube (14b) et le quatrième segment de tube (14d) présente une seconde extrémité libre (16) éloignée du troisième segment de tube (14c), **caractérisé en ce que**
le profilé tubulaire est cintré à partir d'un seul tube de base,
et **en ce que** les deux extrémités libres (15, 16) sont distantes l'une de l'autre dans la direction transversale du cadre de bicyclette (2) de sorte qu'une roue arrière (3) prévue à cet effet puisse être logée de manière rotative entre elles.

2. Cadre de bicyclette selon la revendication précédente, **caractérisé en ce que** le profilé tubulaire est cintré à partir d'un seul tube de base rectiligne et/ou **en ce qu'**il est formé entre le premier et le second segment de tube (14a, 14b) une première zone de cintrage (17a), entre le second et le troisième segment de tube (14b, 14c) une seconde zone de cintrage (17b) et/ou
entre le troisième et le quatrième segment de tube (14c, 14d) une troisième zone de cintrage (17c).

3. Cadre de bicyclette selon l'une ou plusieurs des revendications précédentes, **caractérisé en ce que** le cadre de bicyclette (2) comporte une première zone de fixation pour une unité de selle (5), laquelle zone de fixation est disposée de préférence dans la zone de la zone de cintrage (17a),
une seconde zone de fixation pour une unité de guidon (6), laquelle zone de fixation est disposée de préférence dans la zone de la seconde zone de cintrage (17b), et/ou
une troisième zone de fixation pour une unité de pédales (7), laquelle zone de fixation est disposée de préférence dans la zone de la troisième zone de cintrage (17c).

4. Cadre de bicyclette selon l'une ou plusieurs des revendications précédentes, **caractérisé en ce qu'**un moyen de réception (18) pour recevoir l'unité de selle (5), l'unité de guidon (6) et/ou l'unité de pédales (7) est fixé de manière amovible, en particulier par complémentarité de force et/ou de forme, dans au moins l'une des zones de fixation, en particulier sur la circonférence extérieure du profilé tubulaire.

5. Cadre de bicyclette selon l'une ou plusieurs des revendications précédentes, **caractérisé en ce que** le moyen de réception (18) comprend une première et/ou une seconde partie(s) qui, respectivement, entourent partiellement la circonférence extérieure du profilé tubulaire et/ou sont reliés l'une avec l'autre de manière amovible dans la direction circonférentielle du profilé tubulaire.

6. Cadre de bicyclette selon l'une ou plusieurs des revendications précédentes, **caractérisé en ce que** la position du moyen de réception (18) dans la direction longitudinale et/ou circonférentielle du profilé tubulaire est déterminée par complémentarité de formes au moins dans une direction, en particulier au moyen d'un butoir (21) et/ou au moyen d'un contour intérieur du moyen de réception (18) correspondant à la forme négative de la zone de cintrage (17) respectivement attribuée.

7. Cadre de bicyclette selon l'une ou plusieurs des revendications précédentes, **caractérisé en ce qu'**au moins un segment de tube (14), en particulier le premier et/ou le quatrième segment de tube (14a, 14d), présente(nt) une zone de ressort (20) qui est de préférence formée par un rétrécissement de section du profilé tubulaire.

8. Cadre de bicyclette selon l'une ou plusieurs des revendications précédentes, caractérisé en ce qu'un insert (23) pour renforcer le profilé tubulaire est disposé à l'intérieur du profilé tubulaire, en particulier dans la zone d'au moins une zone de cintrage (17), dans laquelle l'insert (23) se compose de préférence d'un matériau creux, en particulier d'un tube, et/ou d'un matériau massif, l'insert (23) s'étend sur au moins une section et/ou au-delà de la zone de cintrage (17) du profilé tubulaire et/ou l'insert (23) adhère au moins partiellement à la face intérieure du profilé tubulaire.

9. Cadre de bicyclette selon l'une ou plusieurs des revendications précédentes, **caractérisé en ce que** le boîtier de pédalier (12) est formé d'un tube de pédalier (26) et/ou est monté sur le profilé tubulaire, sachant que le tube de pédalier (26) présente de préférence dans la direction transversale une ouverture de passage (27) à travers laquelle s'étend le profilé tubulaire, le tube de pédalier (26) est disposé dans la troisième zone de fixation et/ou présente au moins partiellement un contact avec le tube de pédalier (26).

10. Cadre de bicyclette selon l'une ou plusieurs des revendications précédentes, **caractérisé en ce que** la seconde zone de cintrage (17b) présente un premier évidement (24) voisin du tube inférieur, et un second évidement (25) voisin du tube supérieur, qui sont congruents l'un envers l'autre de sorte que le tube de guidon (10) puisse être introduit à travers eux et/ou fixé sur palier rotatif à l'intérieur du profilé tubulaire.

11. Bicyclette avec
un cadre de bicyclette (2),
qui comprend un bras de fourche arrière supérieur, un tube supérieur, un tube inférieur et un bras de fourche arrière inférieur et accueille une roue arrière (3) montée sur palier rotatif,
**caractérisée en ce que**
le cadre de bicyclette (2) se présente sous une forme selon l'une ou plusieurs des revendications précédentes.

12. Procédé de fabrication d'un cadre de bicyclette, en particulier selon l'une ou plusieurs des revendications précédentes, dans lequel un profilé tubulaire est cintré à partir d'un tube de base, en particulier un tube droit, **caractérisé en ce que**
l'ensemble du profilé tubulaire est cintré à partir d'un seul tube de base de sorte qu'une première et une seconde extrémités libres (15, 16) du profilé tubulaire soient distantes l'une de l'autre de sorte qu'une roue arrière (3) prévue à cet effet puisse être accueillie de manière rotative entre ces deux extrémités dans la direction transversale au cadre de bicyclette (2).

13. Procédé de fabrication d'un cadre de bicyclette selon la revendication précédente, **caractérisé en ce que**, avant le cintrage du tube de base, au moins un insert (23) est disposé à l'intérieur du tube de base, en particulier dans une zone de cintrage (17),
le tube de base est cintré dans la zone des deux extrémités de l'insert (23) et/ou dans la zone de l'insert (23) et/ou **en ce que** l'insert (23) est également cintré.

14. Procédé de fabrication d'un cadre de bicyclette selon l'une ou plusieurs des revendications 12-13 précédentes,
**caractérisé en ce que**,
en particulier avant le cintrage du tube de base, un tube de pédalier (26) est glissé via une extrémité libre (15, 16) sur le tube de base ou le profilé tubulaire et fixé dans une zone de fixation du profilé tubulaire pour l'unité de pédales (7).

15. Procédé de fabrication d'un cadre de bicyclette selon l'une ou plusieurs des revendications 12-14 précédentes,
**caractérisé en ce que**
dans la seconde zone de cintrage (17b), un premier évidement (24) voisin du tube inférieur et un second évidement (25) voisin du tube supérieur, sont formés, lesquels qui sont congruents l'un envers l'autre de sorte qu'un tube de guidon (10) puisse être introduit à travers eux et/ou fixé sur palier rotatif à l'intérieur du profilé tubulaire.
